## Europäisches Patentamt
## European Patent Office
## Office européen des brevets

(19)

(11) Veröffentlichungsnummer: **0 010 278**
**A1**

(12)
# EUROPÄISCHE PATENTANMELDUNG

(21) Anmeldenummer: **79103952.2**

(22) Anmeldetag: **15.10.79**

(51) Int. Cl.³: **F 16 B 12/10**
**E 04 B 2/74**

(30) Priorität: **23.10.78 DE 2846057**

(43) Veröffentlichungstag der Anmeldung:
**30.04.80 Patentblatt 80/9**

(84) Benannte Vertragsstaaten:
**AT BE CH FR GB IT LU NL SE**

(71) Anmelder: **VARIO-Werke Dichmann AG
Hauptstrasse 15
D-6233 Kelkheim(DE)**

(72) Erfinder: **Bitterberg, Karl-Georg, Prof.
Wannenstrasse 35
D-7000 Stuttgart 1(DE)**

(72) Erfinder: **Krätschmer, Siegfried
Erich-Ollenhauer-Strasse 50
D-6200 Wiesbaden(DE)**

(74) Vertreter: **Keil, Rainer, Dipl.-Phys.
Patentanwälte MERTENS & KEIL Ammelburgstrasse 34
D-6000 Frankfurt am Main(DE)**

(54) **Koppeleinrichtung für Raumgliederungselemente.**

(57) Koppeleinrichtung (1) für Raumgliederungselemente zur gelenkigen Verbindung von Trennwänden und dergleichen. Die Koppeleinrichtung (1) weist eine ringsektorförmig verlaufende Nut (10) auf, welche in eine ringsektorförmige Aussparung (11) mündet, wobei ein als zylindrische Kappe (12) ausgebildetes Koppelelement (6) in die Nut (10) axial einsetzbar und mit einer Nase (14) in die Aussparung (11) eindrehbar ist.

FIG.2

Croydon Printing Company Ltd.

- | -

Firma
VARIO-Werke
Dichmann AG

6233 Kelkheim

"Koppeleinrichtung für Raumgliederungselemente"

Die Erfindung betrifft eine Koppeleinrichtung nach dem Gattungsbegriff des Anspruchs 1.

Raumgliederungssysteme bestehen aus verschiedenartigen Raumgliederungselementen, z.B. Wand-, Regal- oder Schrankelementen, welche möglichst lückenlos in variablem Winkel aneinandergreifen. Die hierfür bestimmte Koppeleinrichtung soll auch horizontale Verzweigungen ermöglichen, bei welcher also mehr als zwei Raumgliederungselemente zusammentreffen.

Die bisher bekannten Koppeleinrichtungen lassen zwar diese gewünschten Möglichkeiten zu, sind aber relativ kompliziert im Aufbau, so daß nachträgliche Veränderungen oder Umbauten des Raumgliederungssystems, beispielsweise durch das Büropersonal, schwierig oder gar ausgeschlossen sind.

Aufgabe der Erfindung ist daher die Schaffung einer neuen Koppeleinrichtung, die konstruktiv einfach im Aufbau und damit wirtschaftlich herstellbar ist und gleichzeitig auch beispielsweise ohne Anwendung von Werkzeugen einen Umbau des Raumgliederungssystems auch für Laien zuläßt.

Diese Aufgabe wird mit den Maßnahmen des kennzeichnenden
Teils des Anspruchs 1 gelöst. Das oder die kappenförmigen
Koppelelemente sind demnach von Hand in die kreissektorförmigen Nuten an den Ecken der fest mit den jeweiligen
Raumgliederungselementen verbundenen Koppelbeschläge einsetzbar, daß das Koppelelement den von dem Koppelbeschlag durch
die Nut abgeteilten Zylindersektorabschnitt übergreift.
Eine einfache Drehung des Koppelelementes mit der Nase
in die Aussparung am unteren Ende der Nut legt das Koppelelement axial fest. Mit ein und demselben kappenförmigen
Koppelelement können ersichtlich auch mehr als zwei, insbesondere drei Koppelbeschläge mit ihren Zylindersektorabschnitten verschwenkbar zusammengefaßt werden, da die Kappen
die Zylindersektorabschnitte im Inneren aufnehmen können.
Die Koppeleinrichtung ist sowohl am oberen als auch am
unteren Ende der Raumgliederungselemente ohne Veränderung
einsetzbar.

Ist das Merkmal des Anspruchs 2 vorgesehen, so schließt
die Oberseite des Koppelelementes bündig mit der Oberseite
des Koppelbeschlages ab, so daß es weitgehend in dem Koppelbeschlag verdeckt liegt und auch das Aufstellen der Raumgliederungselemente nicht behindert.

Mit der Maßnahme des Anspruchs 3 kann eine sichere Führung
des unteren Randes des Zylindermantels in dem Koppelbeschlag
erreicht werden.

Wenn das Merkmal des Anspruchs 4 vorgesehen ist, wird die
Kappe gegen den Druck des federelastischen Elementes, welches
beispielsweise eine Blattfeder, eine Spiralfeder, eine
plastische Kunststoffscheibe oder dergleichen sein kann,
voll über den Zylindersektorabschnitt des jeweiligen Koppelbeschlages bis auf den Grund der Nut gedrückt, in welchem Koppelbeschlag das Koppelelement axial festgelegt werden soll. Dabei ist das federelastische Element so bemessen, daß die radial von dem Zylindermantel abweisende Nase erst in die Aussparung am unteren Ende der Nut eingeschwenkt werden kann, wenn das federelastische Element etwas zusammengedrückt ist, so daß dann die Nase aufgrund des von dem federelastischen Element ausgehenden Axialdruckes gegen die Oberseite der Aussparung gedrückt wird und so eine sichere Festlegung des Koppelelementes gegen axiale und ggf. auch Drehbewegung erfolgt.

Insbesondere bei der Ausführungsform mit federelastischem Element kann ein Einrasten des Koppelelementes in einem Koppelbeschlag dann erreicht werden, wenn auch das Merkmal des Anspruchs 5 vorgesehen ist. Das Koppelelement läßt sich erst dann wieder aus seiner Einraststellung herausdrehen, wenn ein gewisser Druck auf die Oberseite des Koppelelementes ausgeübt wird.

Eine zweckmäßige Anordnung der Radialnut und der Radialrippe ergibt sich bei einer besonderen Ausführungsform der Erfindung nach Anspruch 6. Statt des Zusammenwirkens von Rippe und Nut kann auch das reibschlüssige Ineinandergreifen einander zugeordneter Flächen von Koppelelement und Koppelbeschlag vorgesehen sein, wobei die gewünschte Festlegung dabei nicht auf eine bestimmte Drehstellung des Koppelelementes gegenüber dem Koppelbeschlag beschränkt ist.

Das Merkmal des Anspruchs 7 wird vorgesehen, um die Stabilität des ohnehin möglichst schmal bemessenen Zylindersektorabschnittes am Koppelbeschlag nicht zu beeinträchtigen.

Auf der dem jeweiligen Zylindersektorabschnitt abgewandten Seite des Koppelbeschlages ist regelmäßig genügend Material vorhanden, um ohne Beeinträchtigung der genannten Art die Aussparung in der gewünschten Dimensionierung vorsehen zu können.

Die Maßnahme des Anspruchs 8 erleichtert die Betätigung der Koppeleinrichtung beim Zusammen- und Auseinanderbau von Raumgliederungselementen. In den Einsteckschlitz kann man beispielsweise eine Münze eindrücken, das Koppelelement ggf. gegen die Wirkung des zwischen Kappenboden und Oberseite des oder der Zylindersektorabschnitte des Koppelbeschlages drücken und die gewünschte Drehung des Koppelelementes in die Raststellung oder aus dieser Stellung bewerkstelligen.

Weitere Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von der Zusammenfassung von Merkmalen in den Ansprüchen oder deren Rückbeziehung.

Es zeigen:

Fig. 1     die Ansicht eines handelsüblichen Raumgliederungssystems, für das die erfindungsgemäße Koppeleinrichtung bestimmt ist,

Fig. 2     in Schrägansicht die Verbindung zweier aneinander grenzender Wandelemente mit der erfindungsgemäßen Koppeleinrichtung, wobei die Fuge zwischen den Eckpfosten der Wandelemente entgegen der Darstellung normalerweise möglichst eng ausgebildet ist, daß die freie Durchsicht verhindert ist,

Fig. 3    den bei der Erfindung vorgesehenen Koppelbeschlag
in Seitenansicht, teilweise geschnitten (Fig. 3a),
in Stirnansicht gemäß IIIb von Fig. 3a (Fig. 3b)
und in Draufsicht IIIc von Fig. 3a (Fig. 3c),
in einem Horizontalschnitt gemäß IIId-IIId von
Fig. 3e von unten gesehen im Bereich einer Ecke

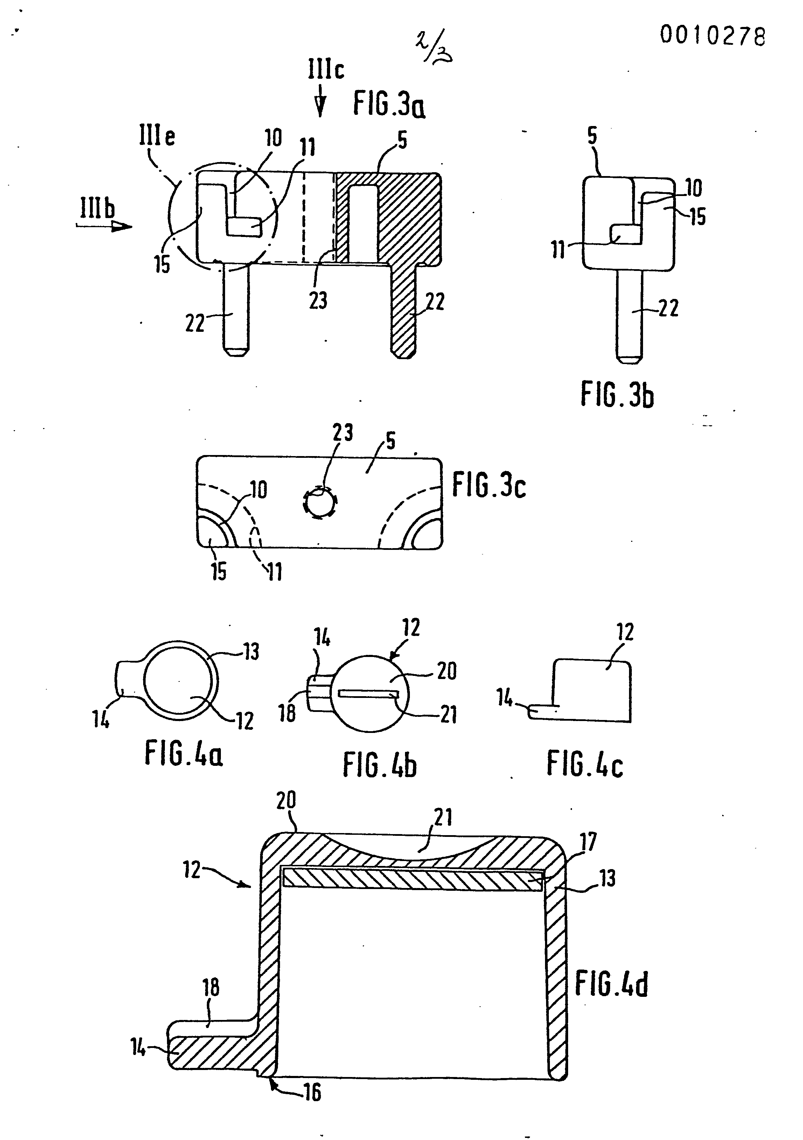

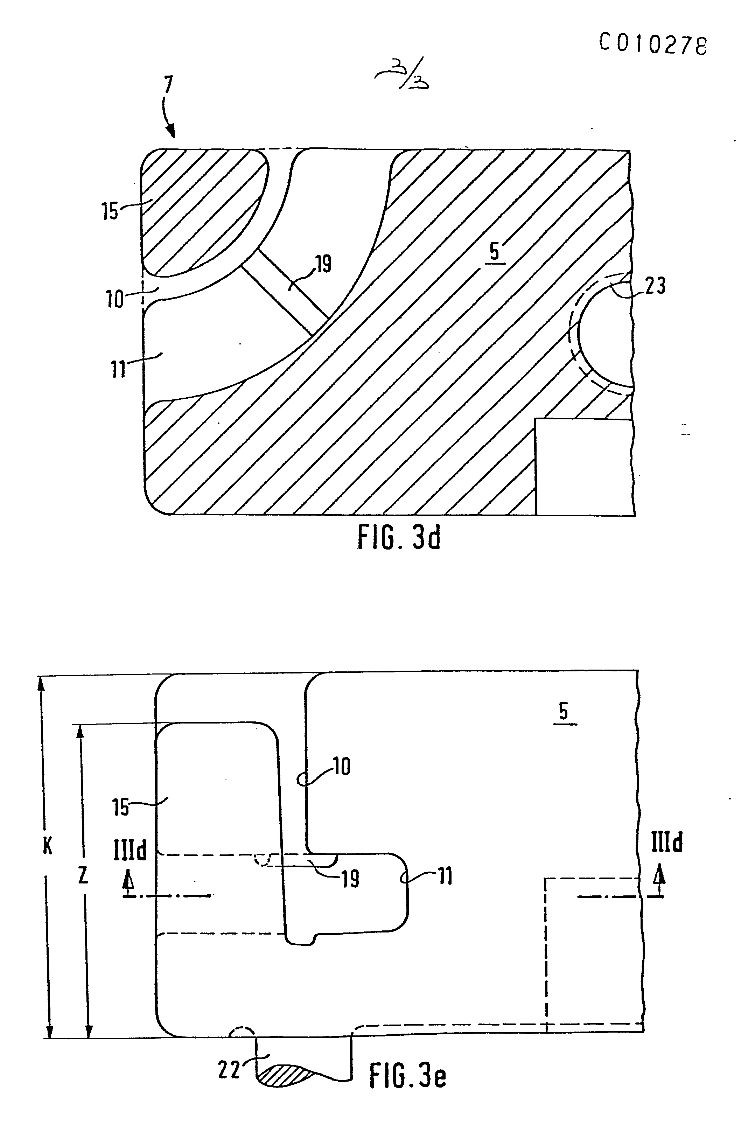

(Fig. 3d) und einen vergrößerten Detailausschnitt
gemäß IIIe von Fig. 3a (Fig. 3e), und

Fig. 4    das bei der erfindungsgemäßen Koppeleinrichtung
verwendete kappenförmige Koppelelement von unten
gesehen (Fig. 4a), in Draufsicht (Fig. 4b), in
Seitenansicht (Fig. 4c) und in vergrößerter Schnittdarstellung (Fig. 4d).

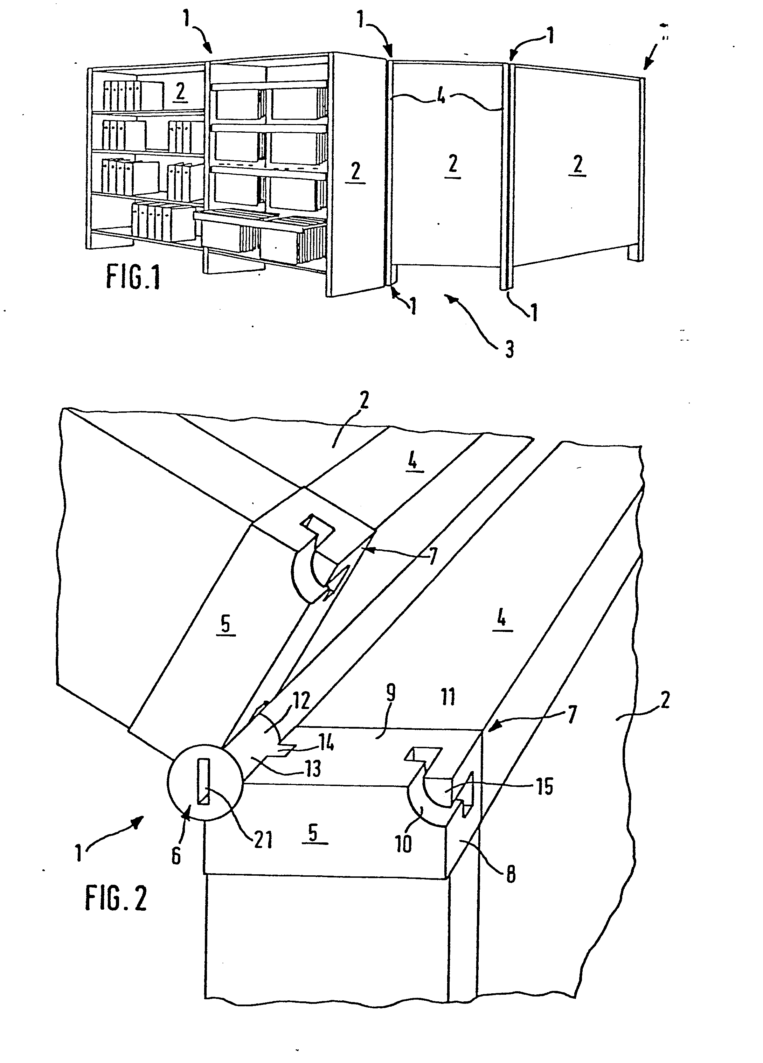

Raumgliederungssysteme 3, wie in Fig. 1 dargestellt, bestehen aus Raumgliederungselementen 2, die als Wand-, Schrank-
oder Regalelemente ausgebildet sein können. Zur gelenkigen
Verbindung unter der Möglichkeit einer horizontalen Verzweigung ist die erfindungsgemäße Koppeleinrichtung 1 vorgesehen, deren Lage in Fig. 1 durch Hinweispfeile verdeutlicht
ist.

Aus der demgegenüber vergrößerten Schrägansicht von Fig.
2 ergibt sich, daß die Koppeleinrichtung 1 an jedem Elementpfosten 4 eines in diesem Fall als Wandelement dargestellten
Raumgliederungselementes 2 einen Koppelbeschlag 5 hat,
welcher jeweils bündig, beispielsweise mittels Stiften
22, die in entsprechende Bohrungen des jeweiligen Eckpfostens
4 ragen, festgelegt ist. Der Koppelbeschlag 5 hat eine
Gewindebohrung 23 zum Einsetzen einer (nicht dargestellten)
Höhenausgleichsschraube, wo die Koppeleinrichtung 1 am
unteren Ende der Eckpfosten 4 eingesetzt wird. Jeder so
an der oberen oder unteren Ecke des Raumgliederungselementes
2 festgelegte Koppelbeschlag 5 hat an der jeweils auswärts weisenden Ecke 7 eine ringsektorförmig verlaufende
Nut 10, die über ihre Tiefe je einen Zylindersektorabschnitt
15 von dem Grundkörper des Koppelbeschlages 5 abteilt.
Die Nut verläuft also von einer vertikalen Seitenfläche
8 zur benachbarten vertikalen Seitenfläche 9 im Eckbereich
des Koppelbeschlages 5, im dargestellten Fall also über
$90^{o}$. Der Mittelpunktswinkel, den die Seitenflächen des
Zylindersektorabschnittes 15 einschließen kann, wie im
dargestellten Falle ebenfalls $90^{o}$ betragen, er kann aber
auch geringer oder größer sein, was beispielsweise für
die Festlegung des Schwenkbereiches nützlich sein kann.
Im unteren Bereich der jeweiligen Nut 10 weitet sich diese
ins Innere des jeweiligen Koppelbeschlages hin radial zu
einer Aussparung 11 aus. Auf zwei oder mehrere Zylindersektorabschnitte 15 an den entsprechenden Ecken einander
zuzuordnender Raumgliederungselemente 2 ist ein in Form
einer zylindrischen Kappe 12 ausgebildetes Koppelelement
6 aufsetzbar, so daß die Kappe 12 mit ihrem Zylindermantel
13 in die jeweilige ringsektorförmige Nut eingreift. Im
unteren Bereich des Zylindermantels 13 der Kappe 12 weist
eine Nase 14 radial nach außen. Die axiale Lage der Nase
14 ist so getroffen, daß sie beim Drehen der Kappe 12 in
die Aussparung 11 zu liegen kommt. Die Kappe 12 ist ihrer
Höhe nach so bemessen, daß sie im eingebauten Zustand mit
ihrer Oberseite bündig zu dem angrenzenden Koppelbeschlag
5 liegt. Aus diesem Grunde ist unter Berücksichtigung der
Dicke des Kappenmaterials die Höhe Z des jeweiligen Zylinderabschnittes 15, wie sich insbesondere aus Fig. 3e ergibt,
gegenüber der Höhe K des Koppelbeschlages 5 zurückgesetzt.
Die Nut 10 ragt, wie ebenfalls aus Fig. 3e ersichtlich,
axial etwas tiefer in den Koppelbeschlag 5 hinein als die

Aussparung 11. Auf diese Weise wird der untere Rand 16 des Koppelelementes 6 sicher in dem Koppelbeschlag 5 geführt, wenn, wie aus Fig. 4d ersichtlich, die radial auswärts weisende Nase 14 geringfügig oberhalb des unteren Randes 16 des Zylindermantels 13 angebracht ist. Wie aus Fig. 4d ersichtlich, kann auf der Unterseite der Stirnwand der Kappe 12 ein federelastisches Element 17, beispielsweise in der Form einer Blattfeder, angeordnet sein. Die Innenhöhe der Kappe 12, die Lage der Nase 14 und die Tiefe der Lage der Aussparung 11 sind dabei so aufeinander abgestimmt, daß die Nase 14 mit der Kappe 12 erst in die Aussparung 11 hereingeschwenkt werden kann, wenn auf die Oberseite 20 der Kappe 12 ein gewisser Druck gegen das federelastische Element 17 ausgeübt wird, das sich zwischen Unterseite der Kappenstirnwand und Oberseite des oder der Zylindersektorabschnitte 15 legt. Der Druck auf die Kappe 12 und die gleichzeitige Drehung der Kappe 12 kann mit Hilfe einer Münze bewerkstelligt werden, die in einen in der Oberseite 20 der Kappe 12 vorgesehenen Einsteckschlitz 21 eingeführt wird. Das Einrasten des Koppelelementes 6 gegenüber einem Koppelbeschlag 5 wird dadurch erreicht, daß auf der Oberseite der Nase 14 eine Radialnut 18 und auf der nach unten weisenden Fläche der Aussparung 11 eine zu der Radialnut 18 passende Radialrippe 19 vorgesehen ist. Aufgrund der Wirkung des federelastischen Elementes 17 rasten Radialnut 18 und Radialrippe 19 in einer vorgegebenen Drehstellung der Kappe 12 ein. Das Koppelelement 6 ist dadurch nicht nur gegen axiale sondern auch gegen Drehbewegung gesichert. Ein Ausheben der Radialrippe 19 aus der Radialnut 18 kann erst unter Aufwendung eines gewissen Druckes gegen das federelastische Element 17 erzielt werden, da diese Federkraft die Radialrippe 19 in der Radialnut 18 hält.

- 8 -

Mit der Erfindung ist demnach eine sehr einfach herstellbare und auch einfach montierbare Koppeleinrichtung für Raumgliederungselemente mobiler Raumgliederungssysteme vorgeschlagen, welche sicher und einfach funktioniert. Für das Montieren und Demontieren der Elemente sind keine Werkzeuge erforderlich.

Bezugszeichenliste:

1   Koppeleinrichtung

2   Raumgliederungselement

3   Raumgliederungssystem

4   Elementpfosten

5   Koppelbeschlag

6   Koppelelement

7   Ecke

8   Seitenfläche

9   Seitenfläche

10  Nut

11  Aussparung

12  Kappe

13  Zylindermantel

14  Nase

15  Zylindersektorabschnitt

16  Rand

17  federelastisches Element

18  Radialnut

19  Radialrippe

20  Oberseite

21  Einsteckschlitz

22  Stifte

23  Gewindebohrung

001027٤

# MERTENS & KEIL
## PATENTANWÄLTE

6000 Frankfurt am Main

Firma
VARIO-Werke
Dichmann AG
Hauptstraße 15
6233 Kelkheim

D 5 P 17 EP
11. Oktober 1979

"Koppeleinrichtung für Raumgliederungselemente"

A n s p r ü c h e :

1.  Koppeleinrichtung für Raumgliederungselemenete mobiler Raumgliederungssysteme mit jeweils einem an den zugeordneten Elementpfosten befestigten Koppelbeschlag und einem die Raumgliederungselemente gelenkig verbindenden Koppelelement, dadurch gekennzeichnet, daß der Koppelbeschlag (5) an mindestens einer auswärts weisenden Ecke (7) eine von benachbarter Seitenfläche (8) zu benachbarter Seitenfläche (9) ringsektorförmig verlaufende Nut (10) aufweist, welche an ihrem unteren Ende in eine erweiterte ringsektorförmige Aussparung (11) gleicher Bogenlänge mündet, und daß in die Nut (10) das als zylindrische Kappe (12) ausgebildete Koppelelement (6) mit seinem Zylindermantel (13) axial einsetzbar bzw. eingesetzt und mit einer von dem Zylindermantel (13) radial abweisenden Nase (14) in die Aussparung (11) eindrehbar bzw. eingedreht ist.

2. Koppeleinrichtung nach Anspruch 1, dadurch gekennzeichnet, daß der von der Nut (10) aus dem Koppelbeschlag (5) abgeteilte Zylindersektorabschnitt (15) in seiner Höhe (Z) gegenüber der Höhe (K) des Koppelbeschlages (5) zurückgesetzt ist.

3. Koppeleinrichtung nach Anspruch 1 oder 2, dadurch gekennzeichnet, daß sich die Nut (10) geringfügig tiefer in den Koppelbeschlag (5) erstreckt als die Aussparung (11) und daß die Nase (14) geringfügig oberhalb des unteren Randes (16) des Zylindermantels (13) wegragt.

4. Koppeleinrichtung nach einem der Ansprüche 1 bis 3, dadurch gekennzeichnet, daß in die Kappe (12) ein federelastisches Element (17) eingesetzt ist.

5. Koppeleinrichtung nach einem der Ansprüche 1 bis 4, dadurch gekennzeichnet, daß die Nase (14) in Einbaustellung des Koppelelementes (6) durch eine Radialnut (18) mit einer Radialrippe (19) des Koppelbeschlages (5) zusammenwirkt.

6. Koppeleinrichtung nach Anspruch 5, dadurch gekennzeichnet, daß die Radialnut (18) auf der Oberseite der Nase (14) und die Radialrippe (19) auf der Oberseite der Aussparung (11) ausgebildet ist.

7. Koppeleinrichtung nach einem der Ansprüche 1 bis 6, dadurch gekennzeichnet, daß die Nase (14) sich von dem Zylindermantel (13) aus radial nach außen erstreckt und die Aussparung (11) eine radial ins Innere des Koppelbeschlages (5) weisende Erweiterung der Nut (10) darstellt.

V 4

8. Koppeleinrichtung nach einem der Ansprüche 1 bis 7, dadurch gekennzeichnet, daß auf der Oberseite (20) des Koppelelementes (6) ein Einsteckschlitz (21) für eine Münze oder dergleichen vorgesehen ist.

V 4

FIG.1

FIG.2

IIIc

**FIG.3a**

IIIe    10    11    5

IIIb

15    23    22    22

5    10    15

11    22

**FIG.3b**

23    5

10

15    11

**FIG.3c**

13    14    12    20    12

14    12    18    21    14

**FIG.4a**    **FIG.4b**    **FIG.4c**

20    21    17

12    13

18    14    16

**FIG.4d**

7

15

19

10

5

23

11

**FIG. 3d**

5

15

10

K

Z

IIId

IIId

19

11

22

**FIG. 3e**

# EUROPÄISCHER RECHERCHENBERICHT

**Europäisches Patentamt**

Nummer der Anmeldung

001027&

EP 79 10 3952

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | F 16 B 12/10 <br> E 04 B 2/74 |
| | US - A - 3 554 382 (GRINDBERGS) <br> * Spalten 1,2; Figuren * <br><br> -- <br><br> FR - A - 2 244 365 (SPERRY RAND) <br> * Seite 1, Zeilen 33-40; Seite 2; Figuren * <br><br> -- <br><br> DE - C - 951 843 (BOSCH) <br> * Seite 2; Figuren * <br><br> ---- | 1,2,7 <br><br><br><br> 1 <br><br><br><br><br> 1 | |

**RECHERCHIERTE SACHGEBIETE (Int. Cl. 3)**

F 16 B 12/00
          5/00
         17/00
          3/00
E 05 D   1/00
E 04 B   2/00

Der vorliegende Recherchenbericht wurde für alle Patentansprüche erstellt.

| Recherchenort | Abschlußdatum der Recherche | Prüfer |
|---|---|---|
| Den Haag | 14-01-1980 | FLORES |

EPA form 1503.1  06.78